# EUROPEAN PATENT SPECIFICATION

(11) **EP 0 342 240 B1**
(45) Date of publication and mention of the grant of the patent: **13.03.1996**
(21) Application number: 88909126.0
(22) Date of filing: 19.10.1988
(51) Int. Cl.: G05B 19/409

(54) **METHOD OF CORRECTING FIGURE ELEMENT**
VERFAHREN ZUR VERBESSERUNG EINES BILDELEMENTES
PROCEDE DE CORRECTION D'UN ELEMENT D'IMAGE

(30) Priority: 20.10.1987 JP 265052/87
(43) Date of publication of application: 23.11.1989
(73) Proprietor: FANUC LTD., Minamitsuru-gun, Yamanashi 401-05 (JP)
(72) Inventor: SEKI, Masaki, Suginami-ku Tokyo 168 (JP); TAKEGAHARA, Takashi, Hachioji-shi Tokyo 192-01 (JP); KAJITANI, Akira, FANUC Dai-3 Vira-karamatsu, Minamitsuru-gun, Yamanashi 401-05 (JP)
(74) Representative: Overbury, Richard Douglas
(86) International application number: PCT/JP88/01058
(87) International publication number: WO 89/04011

(56) References cited:
- EP-A- 332 712
- EP-A- 0 217 048
- JP-A-61 250 706
- JP-A-62 121 511
- US-A- 4 328 550

## Description

This invention relates to a figure element revising method and, more particularly, to a figure element revising method for displaying and revising a group of figure elements including defined figure elements and figure elements defined using the defined figure elements.

In an automatic programming system for creating NC data using an automatic programming language such as APT (automatic programming tools) or FAPT,
(a) a part program based on the automatic programming language is created by defining points, straight lines and circular arcs using simple symbols (this is referred to as "figure definition"), and then defining a tool path using the defined points, straight lines and circular arcs (referred to as "motion statement definition"), and
(b) the part program based on the automatic programming language is subsequently converted into NC data comprising NC data (EIA codes or ISO codes) in a format capable of being executed by an NC unit.

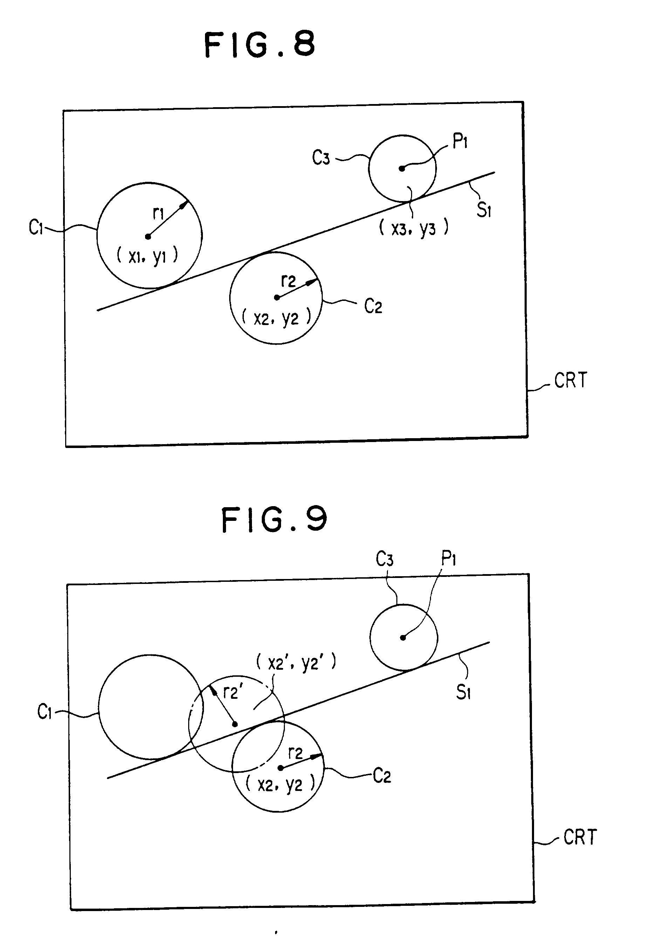

For example, in the creation of a figure definition statement based on automatic programming language, figure definition is performed by defining a point P₁ and circles C₁, C₂ as follows using a keyboard or tablet:${\text{C}}_{\text{1}} {\text{= x}}_{\text{1}} {\text{, y}}_{\text{1}} {\text{, r}}_{\text{1}}$${\text{C}}_{\text{2}} {\text{= x}}_{\text{2}} {\text{, y}}_{\text{2}} {\text{, r}}_{\text{2}}$${\text{P}}_{\text{1}} {\text{= x}}_{\text{3}} {\text{,y}}_{\text{3}}$ as shown in Fig. 8. A straight line S₁ and a circle C₃ are then defined as follows using the defined figure elements:${\text{S}}_{\text{1}} {\text{= C}}_{\text{1}} {\text{, C}}_{\text{2}} \text{, B, A}$${\text{C}}_{\text{3}} {\text{= P}}_{\text{1}} {\text{, S}}_{\text{1}}$

In the foregoing,
(1) signifies a circle C₁ of center (x₁,y₁) and radius r₁;
(2) signifies a circle C₂ of center (x₂,y₂) and radius r₂;
(3) signifies a point whose coordinates are (x₃ ,y₃);
(4) signifies a straight line (tangent) S₁ that is tangent to the lower side of circle C₁ and the upper side of circle C₂; and
(5) signifies a circle C₃ tangent to the straight line S₁ and having the point P₁ as its center. The alphabetic character A in (4) is a qualifier meaning "above", and the alphabetic character B is a qualifier meaning "below".

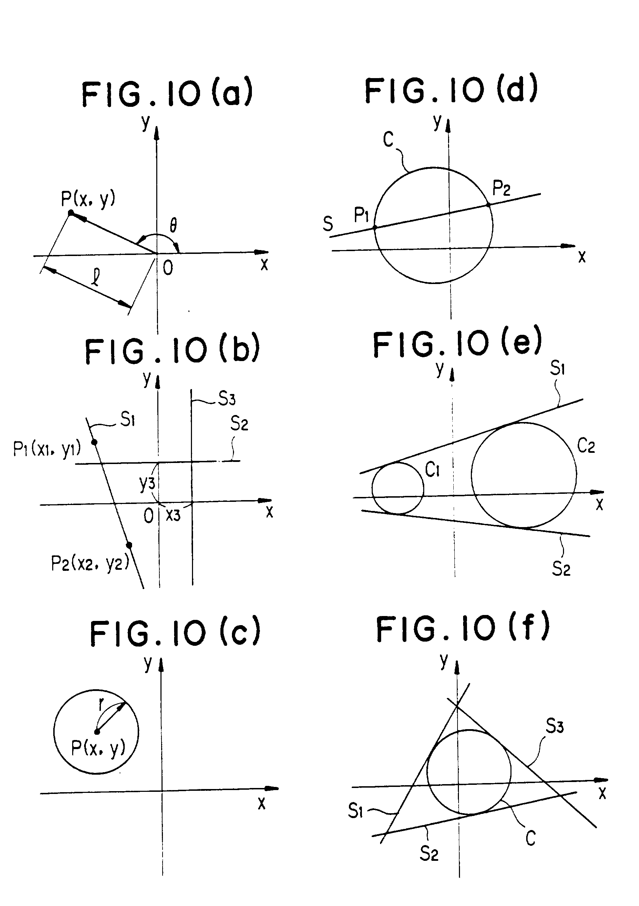

There are two methods of figure definition, as will be understood from the foregoing. A first definition method entails defining points, straight lines and circles using absolute numeric data. A point is defined as$\text{P = x, y}$ using the coordinates (x,y) of the point [see Fig. 10(a)]; a straight line is defined as${\text{S = x}}_{\text{1}} {\text{, y}}_{\text{1}} {\text{, x}}_{\text{2}} {\text{, y}}_{\text{2}}$ using coordinate points (x₁,y₁), (x₂,y₂) of two points P₁, P₂ through which the straight line passes [see Fig. 10(b)]; and a circle is defined as$\text{C = x, y, r}$ using the coordinates (x,y) of the center of the circle and the radius r of the circle [see Fig. 10(c)]. A figure definition statement based on the first definition method shall be referred to as a first definition statement.

The second definition method entails defining straight lines and circles using other points, straight lines and circles that have already been defined. For example, point P₁ [see Fig. 10(d)] is defined as follows:${\text{P}}_{\text{1}} \text{= S, C, L}$ (the alphabetic character L is a qualifier meaning "left"); the straight lines S₁, S₂ [see Fig. 10(e)] are defined as follows:${\text{S}}_{\text{1}} {\text{= C}}_{\text{1}} {\text{, C}}_{\text{2}} \text{, A, A}$${\text{S}}_{\text{2}} {\text{= C}}_{\text{1}} {\text{, C}}_{\text{2}} \text{, B, B}$ (the alphabetic character A is a qualifier meaning "above", and the alphabetic character B is a qualifier meaning "below); and the circle C [see Fig. 10(f)] is defined as follows, by way of example:${\text{C = S}}_{\text{1}} {\text{, S}}_{\text{2}} {\text{, S}}_{\text{3}} \text{, R, A, L}$ (the alphabetic character R is a qualifier meaning "right"). A figure definition statement based on the second definition method shall be referred to as a second definition statement. The foregoing method in which elements already defined are used to define other elements is only one example, there being many other methods of definition available.

When figure definition is performed, the arrangement is such that a figure element is defined by the first definition statement, and another figure element is defined by the second definition statement based on the figure element in accordance with the first definition statement.

There are cases where it is desired to modify the center (x₂,y₂) and radius r₂ of the circle C₂, which is an example of an already defined figure element (Fig. 8), to (x₂′,y₂′) and r₂′, respectively, to arrive at the circle indicated by the broken line in Fig. 9. When the definition statement of circle C₂ is modified to${\text{C}}_{\text{2}} {\text{= x}}_{\text{2}} {\text{′,y}}_{\text{2}} {\text{′, r}}_{\text{2}} \text{′}$ in such case, the straight line S₁ defined as being tangent to the lower side of circle C₁ and the upper side of circle C₂ fails to exist and an error is generated. When the error occurs, automatic programming cannot resume until the error is removed. Consequently, in the prior art, it is necessary for the operator to manually call a figure definition statement revision screen, search for all error locations from the figure definition statement, perform redefinition, display the redefined figure element and verify the same. This is a troublesome operation.

Accordingly, an object of the invention is to provide a figure element revising method in which it is possible to easily and rapidly eliminate any error that might be generated, by revision of a figure element, in a figure definition statement which utilizes the revised figure element.

Another object of the invention is to provide a figure element revising method whereby a figure definition statement in which an error has occurred can be easily and rapidly revised into another correct figure definition statement.

A further object of the invention is to provide a figure element revising method whereby a figure definition statement in which an error has occurred and a figure element based on this figure definition statement can be recognized visually with ease.

A further object of the invention is to provide a figure element revising method in which it is unnecessary to change over to a revision screen each time an error occurs.

EPA-0 332 712 is relevant under Art. 54(3) EPC and discloses a method of correcting a contour profile defined by a part program. When a figure element comprised in the contour profile is corrected, the result of correction is also reflected in another figure element defined by utilising the first-mentioned figure element. Also, there is known from EP-A-0 217 048 a method of editing a graphic object in an interactive draw graphic system, wherein the operator is allowed to select one of two editing modes which results in a graphic object being either redefined or remaining as is when a graphical editing action is applied only to a portion of the object.

According to the present invention there is provided a method of creating numerical control data in the form of a part program defining a tool path by means of figure elements including independently defined first figure elements and second figure elements defined in dependence on said first figure elements, said figure elements being stored in a programming apparatus by means of respective figure definition statements and displayed on a display screen under control of a system program of the programming apparatus, in which method any one of said first figure elements is revised by changing its figure definition statement, characterised in that: when a figure definition statement of a first figure element is revised, the system program checks to determine whether an error has occurred in a figure definition statement of any one of said second figure elements due to revision of the first-mentioned figure definition statement; when such an error has occurred, the system program displays the figure definition statement in which the error has occurred on the display screen and displays, in different colours, that second figure element prior to revision specified by the figure definition statement in which the error has occurred, and any other second figure element defined in dependence on said first-mentioned second figure element; and when the figure definition statement in which the error has occurred is revised, said first-mentioned second figure element is displayed based on said revised definition statement.

Preferably, when existence of a figure element specified by a figure definition statement is impossible, a decision is rendered to the effect that an error has occurred in that figure definition statement.

For a better understanding of the present invention and to show how it may be put into effect reference will now be made, by way of example, to the accompanying drawings in which:
Fig. 1 is a block diagram of an apparatus for practising the present invention;
Fig. 2 is a view for describing the principal portion of a a menu chart;
Fig. 3 is a flowchart of a preferred example of figure element revision processing according to the invention;
Figs. 4 through 7 are views for describing an embodiment of the invention; and
Figs. 8 through 10 are views for describing an example of the prior art.

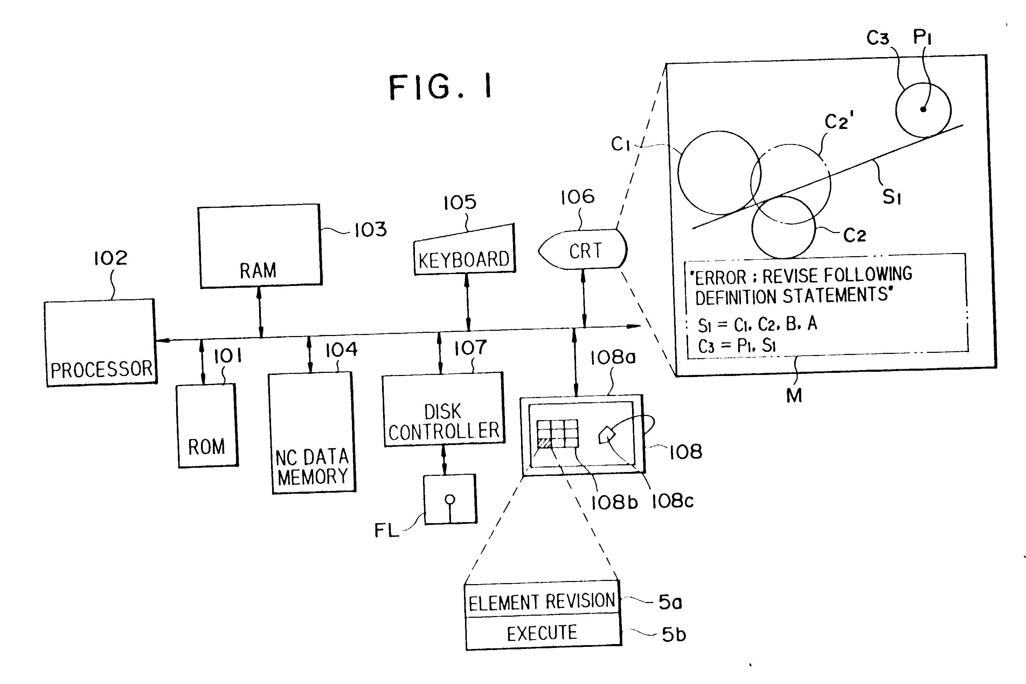

Fig. 1 is a block diagram of an apparatus for practicing the present invention.

Numeral 101 denotes a ROM storing a loading program and the like, 102 a processor for executing automatic programming processing, and 103 a RAM for storing a system program read in from a floppy FL, as well as various parameters and results of processing. Numeral 104 denotes an NC data memory for storing the finally created NC data having an executable format, 105 a keyboard, 106 a display unit (CRT), 107 a disc controller, and 108 a tablet device having a tablet surface 108a to which a menu chart 108b having menu items is affixed. Prescribed menu items are picked by a tablet cursor 108c. A graphic cursor on a display screen is moved by moving the cursor 108c on the tablet surface. FL represents a floppy disc.

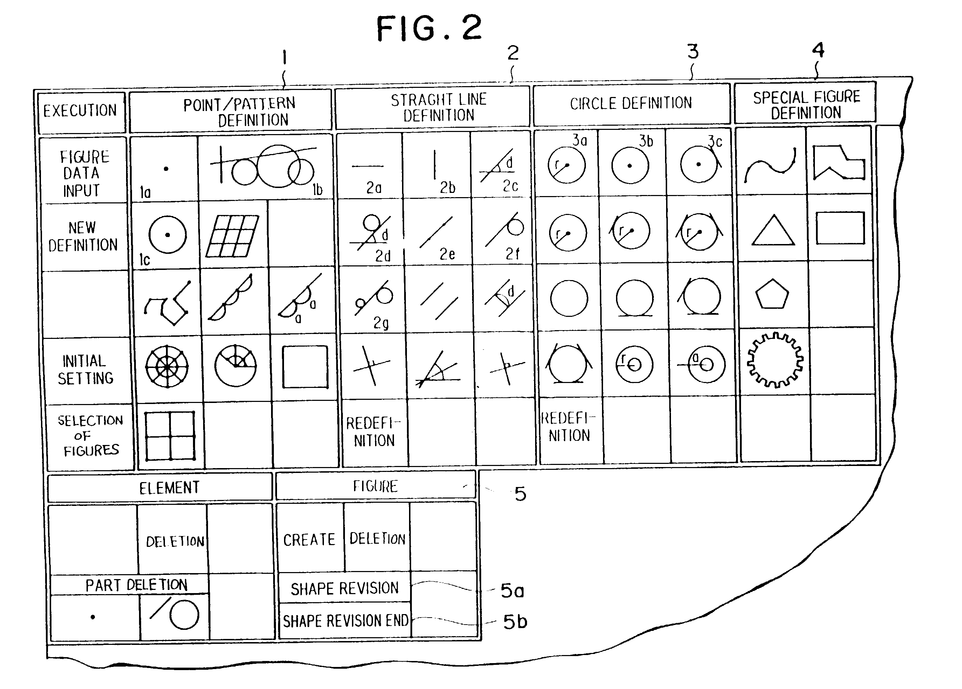

Fig. 2 is a view for describing the principal parts of the menu chart 108b. Numeral 1 is a "POINT/PATTERN DEFINITION" section, 2 a "STRAIGHT LINE DEFINITION" section, 3 a "CIRCLE DEFINITION" section, 4 a "SPECIAL FIGURE DEFINITION" section and 5 a "FIGURE EDITING" section. The "FIGURE EDITING" section 5 includes an "ELEMENT REVISION" item 5a and an "EXECUTE" item 5b.

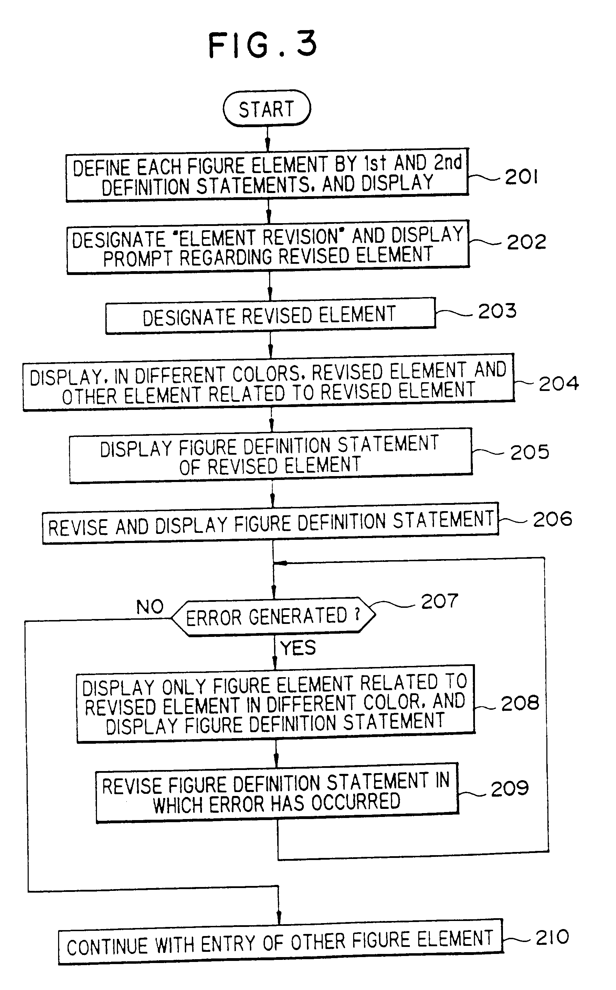

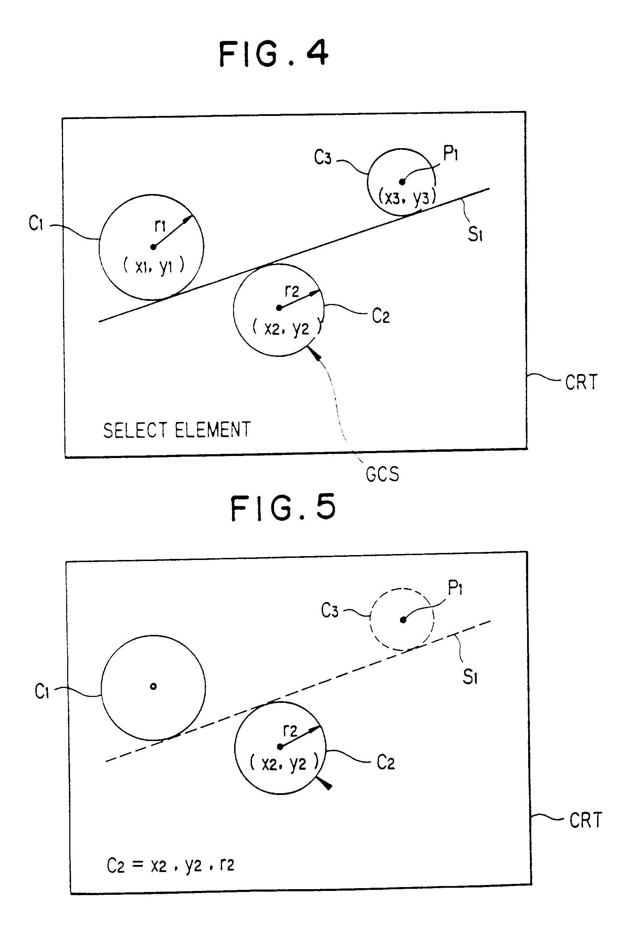

Fig. 3 is a flowchart of a preferred example of figure element revision processing according to the invention, and Figs. 4 through 7 are views for describing figure element revision processing. The figure element revising method will now be described in accordance with Figs. 3 through 7. The system program for creating the NC part program, parameters and the like have already been stored in the RAM 103 from the floppy disc FL.

The circles C₁, C₂, C₃, straight line S₁ and point P₁ shown in Fig. 4 are defined by the first definition statement based on a direct coordinate input, or by the second definition statement while citing figure elements displayed on the CRT 106, using the tablet 108 and keyboard 105. As for the figure definition statements, it is assumed that figure definition is performed as follows, just as described above in relation to Fig. 8:${\text{C}}_{\text{1}} {\text{= x}}_{\text{1}} {\text{, y}}_{\text{1}} {\text{, r}}_{\text{1}}$${\text{C}}_{\text{2}} {\text{= x}}_{\text{2}} {\text{, y}}_{\text{2}} {\text{, r}}_{\text{2}}$${\text{P}}_{\text{1}} {\text{= x}}_{\text{3}} {\text{, y}}_{\text{3}}$ Each of the foregoing is a first definition statement.${\text{S}}_{\text{1}} {\text{= C}}_{\text{1}} {\text{, C}}_{\text{2}} \text{, B, A}$${\text{C}}_{\text{3}} {\text{= P}}_{\text{1}} {\text{, S}}_{\text{1}}$ Each of the foregoing is a second definition statement.

In the present method, the figure definition statements are stored in the RAM 103 just as defined above, the entirety of the second definition statement is re-expressed by the first definition statement and is similarly stored in the RAM 103, and each figure element is displayed on the CRT 106 based on the first definition statement (step 201).

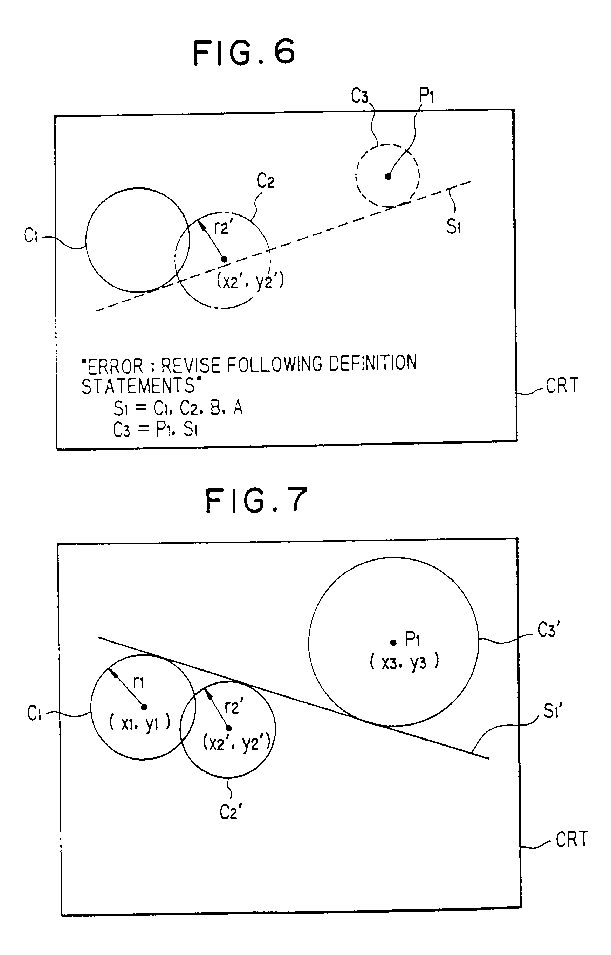

Under these conditions, assume that the circle C₂ (Fig. 4) among the group of figure elements displayed on the CRT 106 is re-defined as shown by the one-dot chain line in Fig. 6. In such case, the "ELEMENT REVISION" item 5a is picked from the table menu chart 108b. In response to selection of "ELEMENT REVISION", the processor 102 displays the prompt "SELECT ELEMENT" on the CRT 106 and causes the graphic cursor GCS to be displayed on the CRT in movable fashion (step 202).

When graphic cursor GCS is positioned on the circle C2, which is the element to be revised, in order to pick the same (step 203; Fig. 5), the processor 102 obtains the figure elements related to the circle C₂, namely the circle C₂, which is the selected element, the figure element (straight line S₁ in the example) defined using the circle C₂, and the figure element (circle C₃ in the example) defined using the figure element S₁, and causes these figure elements to be displayed in different colors (step 204; Fig. 5). For example, if all of the figure elements prior to revision are displayed in green, the circle C₂ may be displayed in red after it is selected, and the straight line S₁ and circle C₃ may be displayed in yellow.

The data necessary for element revision, namely the definition statement "C₂ = x₂, y₂, r₂" is displayed on the CRT 106 to make possible revision of the selected element (step 205).

Next, the operator modifies the definition statement of circle C₂ to "C₂ = x₂′, y₂′, r₂′" and picks the "EXECUTE" item 5b from the tablet menu chart 108 to execute revision. When this is done, the processor 102 changes the circle C₂ (Fig. 5) to the circle C₂ (the one-dot chain line in Fig. 6) and causes this to be displayed (step 206).

At the same time, the processor 102 performs a check to determine whether an error has been generated in the definition statement of a figure element related to the circle C₂, namely whether existence of a figure element related to the circle C₂ is possible (step 207). In this example, the definition statement of the straight line S₁, which is a figure element related to the circle C₂, is "S₁ = C₁, C₂, B, A" (a straight line tangent to circle C₁ from below and tangent to circle C₂ from above). Consequently, it is impossible for the straight line S₁ to exist. The processor 102 therefore decides that the definition of the straight line S₁ is impossible and generates an error (referred to as a "definition error").

When a definition error is generated, the processor 102 causes the element (i.e., straight line S₁) specified by the figure definition statement in which the definition error has occurred, and the element (i.e., circle C₃) defined utilizing this element S₁, to be displayed in mutually different colors on the CRT 106. For example, if the displayed color of the figure elements is green for both circles C₁ and C₂, then the straight line S₁ will be displayed in red and the circle C₃ in yellow. Further, the processor 102 causes the data necessary for revision of the straight line S₁ and circle C₃, namely the following prompt and definition statements:
"ERROR; REVISE FOLLOWING DEFINITION STATEMENTS:${\text{S}}_{\text{1}} {\text{= C}}_{\text{1}} {\text{, C}}_{\text{2}} \text{, B, A} {\text{C}}_{\text{3}} {\text{= P}}_{\text{1}} {\text{, S}}_{\text{1}} \text{"}$ to be displayed on the CRT 106 to make possible revision of the definition statements of straight line S₁ and circle C₃ (step 208; Fig. 6).

The operator revises the definition statement of straight line S₁ in which the definition error has occurred to "S₁ = C₁, C₂, B, A" (a straight line tangent to circle C₁ from above and tangent to circle C₂ from above), and picks the "EXECUTE" item 5b from the tablet menu chart 108 (step 209). When this is done, the processor 102 checks to determine whether a definition error has been generated (step 207). If no definition error has been generated, the straight line S₁ displayed on the CRT 106 is revised to S₁′, circle C₃ is revised to circle C₃′, and the displayed colors are returned to the original color green (see Fig. 7) to make possible entry of the next figure element (step 210).

Thus, in accordance with the present invention, revision can be performed rapidly and with ease even if an error is generated, due to revision of a figure element, in a figure definition statement which utilizes the revised figure element.

## Claims

1. A method of creating numerical control data in the form of a part program defining a tool path by means of figure elements (C1, C2, C3, P1, S1) including independently defined first figure elements (C1, C2, P1) and second figure elements (S1, C3) defined in dependence on said first figure elements, said figure elements being stored in a programming apparatus by means of respective figure definition statements and displayed on a display screen under control of a system program of the programming apparatus, in which method any one of said first figure elements (C2) is revised by changing its figure definition statement,
characterised in that:
when a figure definition statement of a first figure element (C2) is revised, the system program checks to determine whether an error has occurred in a figure definition statement of any one of said second figure elements (S1, C3) due to revision of the first-mentioned figure definition statement;
when such an error has occurred, the system program displays the figure definition statement in which the error has occurred on the display screen and displays, in different colours, that second figure element (S1) prior to revision specified by the figure definition statement in which the error has occurred, and any other second figure element (C3) defined in dependence on said first-mentioned second figure element (S1) ; and
when the figure definition statement in which the error has occurred is revised, said first-mentioned second figure element (S1) is displayed based on said revised definition statement.

2. A method according to claim 1, characterised in that in revising the figure definition statement of a first figure element (C2), this first figure element, when designated, is displayed so as to be distinguishable from another figure element, and the figure definition statement of said designated figure element (C2) is displayed on the display screen.

## Patentansprüche

1. Verfahren zum Erzeugen von numerischen Steuerungsdaten in Form eines Teilprogramms, das einen Werkzeugweg mittels Figurelementen (C1, C2, C3, P1, S1) definiert, die unabhängig definierte erste Figurelemente (C1, C2, P1) und zweite Figurelemente (S1, C3), welche in Abhängigkeit von den ersten Figurelementen definiert sind, enthalten, welche Figurelemente in einem Programmierungsgerät mittels betreffender Figurdefinitionsanweisungen gespeichert sind und auf einem Anzeigebildschirm unter Steuerung durch ein Systemprogramm des Programmiergeräts angezeigt werden, bei welchem Verfahren ein beliebiges der ersten Figurelemente (C2) durch Ändern seiner Figurdefinitionsanweisung abgeändert wird, dadurch **gekennzeichnet,** daß
wenn eine Figurdefinitionsanweisung eines ersten Figurelements (C2) geändert ist, das Systemprogramm eine Prüfung durchführt, um festzustellen, ob in einer Figurdefinitionsanweisung eines beliebigen der zweiten Figurelemente (S1, C3) infolge der Änderung der erstgenannten Figurdefinitionsanweisung ein Fehler aufgetreten ist,
wenn ein solcher Fehler aufgetreten ist, das Systemprogramm diejenige Figurdefinitionsanweisung, in welcher der Fehler aufgetreten ist, auf dem Anzeigebildschirm anzeigt und in unterschiedlichen Farben dasjenige zweite Figurelement (S1) vor der Änderung, die durch die Figurdefinitionsanweisung angegeben ist, in welcher der Fehler aufgetreten ist, und jedes weitere zweite Figurelement (C3), welches in Abhängigkeit von dem erstgenannten zweiten Figurelement (S1) definiert ist, anzeigt,und
wenn die Figurdefinitionsanweisung, in welcher der Fehler aufgetreten ist, geändert ist, das erstgenannte zweite Figurelement (S1) auf der Grundlage der geänderten Definitionsanweisung angezeigt wird.

2. Verfahren nach Anspruch 1, dadurch **gekennzeichnet** , daß beim Ändern der Figurdefinitionsanweisung eines ersten Figurelements (C2) dieses erste Figurelement, wenn es bezeichnet ist, derart angezeigt wird, daß es von einem anderen Figurelement unterscheidbar ist, und die Figurdefinitionsanweisung des bezeichneten Figurelements (C2) auf dem Anzeigebildschirm angezeigt wird.

## Revendications

1. Un procédé d'élaboration de données de commande numérique sous la forme d'un programme de pièces définissant un trajet d'outil au moyen d'éléments de figure (C1, C2, C3, P1, S1) comprenant de premiers éléments de figure définis de manière indépendante (C1, C2, P1) et de seconds éléments de figure (S1, C3) définis en dépendance desdits premiers éléments de figure, lesdits éléments de figure étant stockés dans un appareil de programmation au moyen d'énoncés respectifs de définition de figure et affichés sur un écran d'affichage sous la commande d'un programme de système de l'appareil de programmation, procédé dans lequel l'un quelconque desdits premiers éléments de figure (C2) est corrigé en modifiant son énoncé de définition de figure,
caractérisé en ce que :
lorsqu'un énoncé de définition de figure d'un premier élément de figure (C2) est corrigé, le programme de système effectue une vérification pour déterminer si une erreur s'est produite dans un énoncé de définition de figure d'un quelconque desdits seconds éléments de figure (S1, C3) du fait d'une correction de l'énoncé de définition de figure premièrement mentionnées ;
lorsqu'une telle erreur s'est produite, le programme de système affiche l'énoncé de définition de figure dans lequel l'erreur s'est produite sur l'écran d'affichage et affiche, dans des couleurs différentes, ce second élément de figure (S1) avant la correction spécifiée par l'énoncé de définition de figure dans lequel l'erreur s'est produite, et un quelconque autre second élément de figure (C3) défini en dépendance dudit second élément de figure premièrement mentionné (S1) ; et
lorsque l'énoncé de définition de figure dans lequel l'erreur s'est produite est corrigé, ledit second élément de figure premièrement mentionné (S1) est affiché sur la base dudit énoncé de définition corrigé.

2. Un procédé selon la revendication 1, caractérisé en ce que, dans l'opération de correction de l'énoncé de définition de figure d'un premier élément de figure (C2), ce premier élément de figure, lorsqu'il est désigné, est affiché de manière à pouvoir se distinguer d'un autre élément de figure, et l'énoncé de définition de figure dudit élément de figure désigné (C2) est affiché sur l'écran d'affichage.
